# EUROPÄISCHE PATENTSCHRIFT

(11) **EP 3 235 361 B1**
(45) Veröffentlichungstag und Bekanntmachung des Hinweises auf die Patenterteilung: **07.05.2025**
(21) Anmeldenummer: 17401037.1
(22) Anmeldetag: 31.03.2017
(51) Int. Cl.: A01C 7/08, A01C 7/10

(54) **DOSIERVORRICHTUNG FÜR GRANULARES MATERIAL MIT GEREGELTEM ZENTRALDOSIERER**
DOSING DEVICE FOR GRANULAR MATERIAL WITH REGULATED CENTRAL DOSER
DISPOSITIF DE DOSAGE POUR MATERIAU GRANULAIRE COMPRENANT UN DOSAGE CENTRAL RÉGULÉ

(30) Priorität: 21.04.2016 DE 102016107378
(43) Veröffentlichungstag der Anmeldung: 25.10.2017
(73) Patentinhaber: Amazonen-Werke H. Dreyer SE & Co. KG, 49205 Hasbergen (DE)
(72) Erfinder: Teckemeyer, Stephan, 49504 Lotte (DE)

(56) Entgegenhaltungen:
- EP-A1- 2 923 545
- DE-A1- 102014 115 020

## Beschreibung

Die Erfindung betrifft eine Dosiervorrichtung für granulares Material, insbesondere für Saatgut. Die Dosiervorrichtung umfasst einen Vorratsbehälter für das granulare Material, einen mit dem Vorratsbehälter verbundenen Zentraldosierer, einen mit dem Zentraldosierer verbundenen ersten pneumatischen Förderkanal zum pneumatischen Fördern von granularem Material zu einem Verteilkopf, wenigstens eine Säeinrichtung und einen zweiten pneumatischen Förderkanal zum pneumatischen Fördern von granularem Material vom Verteilkopf zur wenigstens einen Säeinrichtung.

Derartige Dosiervorrichtungen sind bekannt. Sie finden beispielsweise in landwirtschaftlichen Sämaschinen zum Fördern und Dosieren von auf einer landwirtschaftlichen Fläche auszubringendem Saatgut Anwendung.

Die Säeinrichtung kann dabei im Wesentlichen aus einem Säschar bestehen, welches das zugeführte granulare Material in den Boden ablegt. Es sind jedoch auch Säeinrichtungen mit zugehörigen Vereinzelungselementen bekannt. Dort wird das über den Verteilkopf zugeführte Saatgut zunächst vereinzelt und dann erst dem Säschar zur Ablage in den Boden zugeführt. Dosiervorrichtungen der oben genannten Art für Einzelkornsämaschinen sind beispielsweise aus der EP 2 298 056 B1 und der EP 2 591 656 A1 bekannt.

Zur Einstellung der über den Zentraldosierer zudosierten Menge an granularem Material wird üblicherweise eine sogenannte Abdrehprobe angewendet. Insbesondere bei Einzelkornsämaschinen sind auch Lösungen bekannt geworden, welche Körnerzähler am Ausgang der Vereinzelungselemente vorsehen und über Messwerte dieser Körnerzähler eine Regelung des Zentraldosierers vornehmen. Hierfür müssen jedoch die Messwerte der Körnerzähler aller Säeinrichtungen berücksichtigt und in eine Einstellung des Zentraldosierers umgesetzt werden.

Eine ähnliche Säeinrichtung ist in der DE 10 2014 115 020 A1 beschrieben. Hier sind körnerzählende Sensoreinrichtungen in Zuführleitungen vorgesehen, welche die Säschare mit einem zentralen Verteilkopf verbinden. Auf Basis der gewonnenen Messwerte wird der Zentraldosierer eingestellt. Eine andere Säeinrichtung ist aus EP 2 923 545 A1 bekannt.

Bei bekannten Systemen ist die Einstellung des Zentraldosierers daher verhältnismäßig aufwendig.

Aufgabe der Erfindung ist es daher, eine Dosiervorrichtung für granulares Material bereitzustellen, bei der die Einstellung eines verwendeten Zentraldosierers auf einfache Weise durchgeführt werden kann. Diese Aufgabe wird durch eine Dosiervorrichtung gemäß Anspruch 1 gelöst. Weitere vorteilhafte Ausgestaltungen der Erfindung sind in den abhängigen Ansprüchen angegeben.

Gemäß der Erfindung ist es also vorgesehen, dass die Säeinrichtung wenigstens eine Luftauslassöffnung aufweist, die durch einen Puffer von granularem Material oder durch ein Blockierelement wenigstens teilweise blockierbar ist, wobei eine Sensoreinheit vorgesehen ist, mit der der im ersten pneumatischen Förderkanal, im zweiten pneumatischen Förderkanal und/oder im Verteilkopf herrschende Druck (der strömenden Luft) bestimmbar ist. Basierend auf einem oder mehreren Messwerten dieser Sensoreinheit kann der Zentraldosierer dann geregelt oder gesteuert werden.

Der Erfindung liegt folgendes Prinzip zugrunde. Die wenigstens eine Luftauslassöffnung der Säeinrichtung kann entsprechend dem Pufferfüllstand verschlossen werden, was zu einem erhöhten Strömungswiderstand des Förderluftstroms führt. Dies wiederum führt zu einem Druckanstieg in der Förderluftleitung. Mit der Sensoreinheit kann dieser Druckanstieg registriert werden. Der bestimmte Druck kann dann zur Regelung des Zentraldosierers herangezogen werden.

Da mit dem erhöhten Druck auch eine verringerte Förderluftströmung einhergeht, kann nach einer nicht erfindungsgemäßen Ausführung alternativ oder zusätzlich zur Bestimmung des Drucks über die Sensoreinheit auch der Volumenstrom bestimmt werden. Der bestimmte Volumenstrom kann dann zur Regelung des Zentraldosierers herangezogen werden.

Bei dem granularen Material kann es sich um Saatgut handeln, alternativ oder zusätzlich jedoch auch um granulares Düngemittel oder granulares Pestizid. Wenngleich hierin also von einer Säeinrichtung die Rede ist, kann diese auch geeignet sein, granulares Düngemittel oder granulares Pestizid auf einer landwirtschaftlichen Fläche abzulegen.

Bei dem Vorratsbehälter kann es sich um einen zentralen Vorratsbehälter handeln, von dem aus granulares Material an die wenigstens eine Säeinrichtung förderbar ist. Es können auch zwei oder mehr Säeinrichtungen vorgesehen sein. Dadurch können mehrere Saatreihen gleichzeitig gebildet werden.

Der Zentraldosierer kann insbesondere ein volumetrischer Zentraldosierer sein. Die Fördermenge des Zentraldosierers kann insbesondere von dessen Drehzahl abhängig sein. Beispielsweise kann der Zentraldosierer eine oder mehrere Zellenradschleusen umfassen.

Der erste pneumatische Förderkanal kann, insbesondere zentral, in den Verteilkopf münden, der mehrere Abgangsleitungen aufweist, die jeweils zu einer Säeinrichtung führen. Im Verteilkopf kann sich der erste pneumatische Förderkanal also gewissermaßen in mehrere zweite pneumatische Förderkanäle aufspalten, die jeweils zu einer der Säeinrichtungen führen.

Die wenigstens eine Säeinrichtung kann insbesondere ein Vereinzelungsaggregat umfassen, wobei das Vereinzelungsaggregat insbesondere einen Sammelbehälter für granulares Material umfasst. Die wenigstens eine Luftauslassöffnung kann insbesondere in dem Sammelbehälter vorgesehen sein.

Es können insbesondere mehrere Luftauslassöffnungen vorgesehen sein, insbesondere zwei oder mehr Luftauslassöffnungen. Es ist auch denkbar, mehrere Luftauslassöffnungen in Form eines Luftauslassgitters oder Luftauslasssiebs vorzusehen. Die Luftauslassöffnungen des Luftauslassgitters oder des Luftauslasssiebs können insbesondere in regelmäßigen Abständen angeordnet sein. Insbesondere können dadurch mehrere Reihen und Spalten von Luftauslassöffnungen gebildet werden.

Die Größe, insbesondere der Durchmesser, der wenigstens einen Luftauslassöffnung kann an die Größe der Körner des granularen Materials angepasst sein. Insbesondere kann die Größe, insbesondere der Durchmesser, der wenigstens einen Luftauslassöffnung kleiner sein als die mittlere Ausdehnung eines Korns des granularen Materials.

Die wenigstens eine Luftauslassöffnung kann kreisförmig sein. In diesem Fall entspricht die Größe der Luftauslassöffnung dem Durchmesser. Andere Geometrien sind jedoch ebenfalls möglich. In diesem Fall kann die größte Ausdehnung der Luftauslassöffnung als Größe der Luftauslassöffnung verwendet werden.

Das Blockierelement zum Blockieren der wenigstens einen Luftauslassöffnung kann ein Ventil, insbesondere ein 2/2-Wege-Magnetventil, sein. Dadurch ist eine einfache und effiziente Regelung der Luftströmung durch die wenigstens eine Luftauslassöffnung möglich.

Die Dosiervorrichtung kann insbesondere so ausgebildet sein, dass die Stellung des Blockierelements von der Größe des Puffers und/oder von der Qualität der Dosierung durch die Säeinrichtung abhängt. Dadurch kann die Nachfüllung der Säeinrichtung mit granularem Material bedarfsgerecht gesteuert oder geregelt werden.

Zur Steuerung oder Regelung des Blockierelements kann die Säeinrichtung ein Steuerelement umfassen oder mit einem Steuerelement verbunden sein. Bei dem Steuerelement kann es sich beispielsweise um einen Bordcomputer einer Sämaschine handeln.

Die Säeinrichtung kann insbesondere eine Sensoranordnung umfassen, mit der die Größe des Puffers und/oder ein von der Größe des Puffers abhängiger Parameter bestimmbar ist, wobei das Blockierelement, insbesondere dessen Stellung, abhängig von der bestimmten Größe des Puffers und/oder von dem bestimmten Parameter steuerbar oder regelbar ist.

Unter der "Größe" des Puffers kann hierin jede Angabe verstanden werden, welche proportional zur Anzahl an Körnern des granularen Materials im Puffer ist. Beispielsweise kann die Größe des Puffers die räumliche Ausdehnung des Puffers in wenigstens einer Richtung angeben. Alternativ oder zusätzlich kann die Größe des Puffers auch die Masse und/oder Anzahl an Körnern des granularen Materials im Puffer angeben.

Als Puffer selbst kann insbesondere ein Reservoir an granularem Material bezeichnet werden, welches der Säeinrichtung mittelbar oder unmittelbar zur Verfügung steht, um daraus granulares Material zu entnehmen und auf der landwirtschaftlichen Fläche abzulegen. Dieser Puffer kann mit granularem Material aus dem Vorratsbehälter über den ersten pneumatischen Förderkanal, den Verteilkopf und den zweiten pneumatischen Förderkanal beschickt werden.

Erfindungsgemäß kann der Zentraldosierer so geregelt oder gesteuert, dass ein gewünschter Druck erhalten wird.

Der gewünschte Druck kann zwischen einem Minimaldruck und einem Maximaldruck liegen. Ein Minimaldruck stellt sich ein, wenn alle Luftauslassöffnungen der Säeinrichtung frei sind, der Puffer also im Wesentlichen leer ist. Ein Maximaldruck stellt sich dagegen ein, wenn alle Luftauslassöffnungen verschlossen sind, der Puffer also vollständig gefüllt ist. In diesem Fall kann der Druck auch rein einem statischen Druck entsprechen, während sonst üblicherweise eine Kombination aus dynamischem und statischem Anteil vorliegt.

Das Regeln oder Steuern des Zentraldosierers kann insbesondere ein Regeln oder Steuern einer Drehzahl oder Fördermenge des Zentraldosierers umfassen.

Der erste pneumatische Förderkanal kann insbesondere mit einem Gebläse verbunden sein, wobei die Sensoreinheit so angeordnet und/oder ausgebildet ist, dass der Druck im Bereich zwischen dem Gebläse und dem Zentraldosierer bestimmbar ist. Mit anderen Worten kann dadurch der Gebläsedruck bestimmt werden.

Alternativ oder zusätzlich kann die Sensoreinheit so angeordnet und/oder ausgebildet sein, dass der Druck im ersten pneumatischen Förderkanal in einem Bereich zwischen dem Zentraldosierer und dem Verteilkopf bestimmbar ist, also stromabwärts des Zentraldosierers.

Wenn die Sensoreinheit so angeordnet und/oder ausgebildet ist, dass der Druck und/oder der Volumenstrom im zweiten pneumatischen Förderkanal bestimmbar sind, kann die Dosiervorrichtung so ausgebildet sein, dass zur Regelung oder Steuerung des Zentraldosierers Messwerte aller zweiten Förderkanäle berücksichtigt werden. Selbst wenn nämlich der Puffer einer Säeinrichtung beispielsweise vollständig gefüllt ist, kann daraus nicht auf den Füllstand der übrigen Säeinrichtungen geschlossen werden. Eine Reduktion der Fördermenge des Zentraldosierers basierend nur auf einem Messwert wäre dann nicht angebracht.

Das Bestimmen des Drucks kann auch ein Bestimmen einer Druckdifferenz umfassen. Als Sensoreinheit zur Bestimmung des Drucks kann beispielsweise ein Manometer (Piezoresistiver Drucksensor) Verwendung finden.

Als Sensoreinheit zur Bestimmung des Volumenstroms kann beispielsweise ein Anemometer (z.B. Ultraschallanemometer) Verwendung finden.

Die Erfindung stellt außerdem eine Sämaschine umfassend eine oben beschriebene Dosiervorrichtung bereit. Die Dosiervorrichtung kann dabei eines oder mehrere der oben genannten Merkmale aufweisen.

Die Erfindung stellt außerdem ein Verfahren zum Betreiben einer Sämaschine bereit, die einen Vorratsbehälter für granulares Material, einen mit dem Vorratsbehälter verbundenen Zentraldosierer, einen mit dem Zentraldosierer verbundenen ersten pneumatischen Förderkanal zum pneumatischen Fördern von granularem Material zu einem Verteilkopf, wenigstens eine Säeinrichtung und einen zweiten pneumatischen Förderkanal zum pneumatischen Fördern von granularem Material vom Verteilkopf zur wenigstens einen Säeinrichtung umfasst, wobei die Säeinrichtung wenigstens eine Luftauslassöffnung aufweist, die durch einen Puffer von granularem Material oder durch ein Blockierelement wenigstens teilweise blockierbar ist, das Verfahren umfassend die Schritte:
Bestimmen mittels einer Sensoreinheit des im ersten pneumatischen Förderkanal, im zweiten pneumatischen Förderkanal und/oder im Verteilkopf herrschenden Drucks und/oder Volumenstroms; und
Regeln oder Steuern des Zentraldosierers basierend auf einem oder mehreren Messwerten der Sensoreinheit. Sensoreinheit, wobei der Zentraldosierer so geregelt oder gesteuert wird, dass ein gewünschter Druck erhalten wird.

Die Sämaschine und deren Elemente können eine oder mehrere der oben genannten Merkmale aufweisen. Das Regeln oder Steuern des Zentraldosierers kann insbesondere einem Regeln oder Steuern der Fördermenge des Zentraldosierers entsprechen. Dies kann beispielsweise über die Regelung oder Steuerung der Drehzahl des Zentraldosierers geschehen.

Die Förderluftströmung im ersten und zweiten pneumatischen Förderkanal kann insbesondere über ein Gebläse bereitgestellt werden. Durch das Gebläse kann in den pneumatischen Förderkanälen ein Überdruck bereitgestellt werden. Dieser Überdruck kann durch die genannte Regelung oder Steuerung auf einem gewünschten Wert gehalten werden.

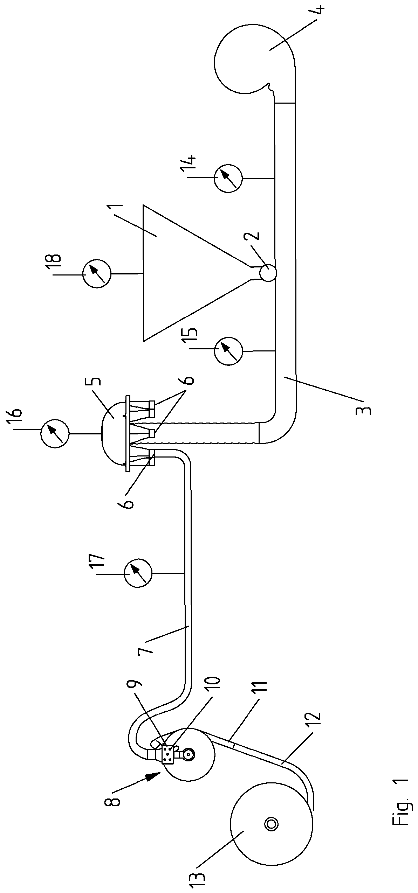

Weitere Merkmale und Vorteile der Erfindung werden nachfolgend anhand der beispielhaften Fig. erläutert. Dabei zeigt
Fig. 1 den schematischen Aufbau einer beispielhaften Dosiervorrichtung.

Fig. 1 zeigt schematisch den Aufbau einer beispielhaften Dosiervorrichtung für granulares Material, insbesondere für Saatgut. Diese Dosiervorrichtung kann Teil einer nicht näher gezeigten landwirtschaftlichen Sämaschine sein.

Die Vorrichtung umfasst einen zentralen Vorratsbehälter 1 für das granulare Material und einen mit dem Vorratsbehälter 1 verbundenen Zentraldosierer 2, der in der Fig. 1 nur schematisch angedeutet ist. Bei dem Zentraldosierer 2 kann es sich insbesondere um einen volumetrischen Zentraldosierer handeln, dessen Fördermenge über die Drehzahl gesteuert wird.

Über den Zentraldosierer 2 kann granulares Material in einen ersten pneumatischen Förderkanal 3 eingebracht werden, in dem mittels eines Gebläses 4 eine Förderluftströmung bereitgestellt wird, welche das über den Zentraldosierer 2 zudosierte granulare Material zu einem Verteilkopf 5 fördert.

Der Verteilkopf 5 weist mehrere Abgangsöffnungen 6 auf. Mit einer der Abgangsöffnungen 6 ist exemplarisch ein zweiter pneumatischer Förderkanal 7 verbunden, der vom Verteilkopf 5 zu einer Säeinrichtung 8 führt. Die Säeinrichtung 8 ist in diesem Fall als Vereinzelungsaggregat ausgebildet und umfasst einen Vorratsbehälter 9, in dem mehrere Luftauslassöffnungen 10 vorgesehen sind. In diesem Vorratsbehälter 10 kann sich ein Puffer an granularem Materials bilden. Das granulare Material wird dem Vorratsbehälter 9 über den ersten pneumatischen Förderkanal 3, den Verteilkopf 5 und den zweiten pneumatischen Förderkanal 7 zugeführt.

Im Gehäuse der Säeinrichtung 8 ist ein hier nicht näher gezeigtes Vereinzelungselement vorgesehen, welches granulares Material aus dem Vorratsbehälter 9 entnimmt und vereinzelt, so dass an einer Ausgangsöffnung 11 der Säeinrichtung in zeitlich annähernd konstanter Abfolge einzelne Körner ausgegeben werden. Diese ausgegebenen Körner des granularen Materials werden über einen Schusskanal 12 an ein Säschar 13 geleitet, welches die Körner auf einer landschaftlichen Fläche ablegt. Das Säschar 13 ist in diesem Beispiel als Scheibenschar ausgebildet. Es wäre aber auch möglich, hier einen Säzinken vorzusehen.

In der Illustration der Fig. 1 ist nur eine Säeinrichtung 8 mit dem Verteilkopf 5 verbunden. Es ist jedoch möglich, dass mit jedem Ausgang 6 des Verteilkopfs 5 eine separate Säeinrichtung verbunden ist, die insbesondere entsprechend der in Fig. 1 gezeigten Säeinrichtung 8 ausgebildet ist.

Der Zentraldosierer 2 dosiert eine konstante Fördermenge je Zeiteinheit dem ersten pneumatischen Förderkanal 3 zu. Das granulare Material wird dann entlang des ersten pneumatischen Förderkanals 3 zum Verteilkopf 5 gefördert, in den der erste Förderkanal 3 zentral einmündet. Innerhalb des Verteilkopfs 5 verteilt sich das granulare Material auf die Abgangsöffnungen 6 und damit auf die einzelnen Säeinrichtungen 8. Im Verteilkopf 5 können Elemente vorgesehen sein, welche die Verteilung des granularen Materials auf die Abgangsöffnungen 6 beeinflussen. Beispielsweise können einzelne Abgänge teilweise oder vollständig abgesperrt werden, so dass über diese Abgänge geringere Mengen an granularem Material an die jeweilige Säeinrichtung geleitet wird. Im einfachsten Fall verteilt der Verteilkopf 5 das über den ersten pneumatischen Förderkanal 3 zugeführte granulare Material jedoch gleichmäßig auf die Abgangsöffnungen 6.

Das somit über den zweiten pneumatischen Förderkanal 7 der Säeinrichtung 8 zugeführte granulare Material sammelt sich dann im Sammelbehälter 9 an. Je höher der Pufferfüllstand im Sammelbehälter 9 ist, desto mehr Luftauslassöffnungen 10 werden von Körnern verschlossen. Verschlossene Luftauslassöffnungen 10 führen zu einem erhöhten Strömungswiderstand des Förderluftstroms, da sich die Querschnittsfläche verringert. Dies wiederum führt zu einem Druckanstieg sowohl im zweiten pneumatischen Förderkanal 7 als auch im Verteilkopf 5 und im ersten pneumatischen Förderkanal 3.

Fig. 1 zeigt mehrere Drucksensoren 14, 15, 16, 17, 18 welche alternativ oder in beliebigen Kombinationen vorgesehen sein können.

Beispielsweise kann ein Drucksensor 14 vorgesehen sein, um den Luftdruck in einem Bereich zwischen dem Gebläse 4 und dem Zentraldosierer 2 zu bestimmen. Ein entsprechender Sensor 15 kann stromabwärts des Zentraldosierers 2 alternativ oder zusätzlich vorgesehen sein. Auch ein Drucksensor 16 im Bereich des Verteilkopfs 5 kann vorgesehen sein, um den Luftdruck im Gehäuse des Verteilkopfs 5 zu bestimmen. Alternativ oder zusätzlich kann auch ein Drucksensor 18 vorgesehen sein, der bei einem als Drucktank ausgeführten Vorratsbehälter 1 den Innendruck bestimmt.

Schließlich kann auch ein Drucksensor 17 in den jeweiligen zweiten pneumatischen Förderkanälen 7 vorgesehen sein. Ein Drucksensor 17 im Bereich eines zweiten pneumatischen Förderkanals 7 lässt jedoch vornehmlich Schlüsse über den Füllstand im Sammelbehälter 9 der jeweiligen Säeinrichtung 8 zu. Zur Regelung oder Steuerung des Zentraldosierers 2 kann daher insbesondere der Gesamtdruck herangezogen werden, der in mehreren, insbesondere allen zweiten pneumatischen Förderkanälen 7 herrscht, welche vom Verteilerkopf abzweigen. Insofern kann jeder zweite Förderkanal 7 mit einem entsprechenden Drucksensor 17 versehen sein und der Gesamtdruck kann durch Summierung der Einzeldrücke in den pneumatischen Förderkanälen 7 gebildet werden.

Alternativ oder zusätzlich zum Druck ist es auch möglich, mittels eines oder mehrerer Volumenstromsensoren den Volumenstrom an granularem Material im ersten pneumatischen Förderkanal 3, im zweiten pneumatischen Förderkanal 7 und/oder im Verteilkopf 5 zu bestimmen. Alternativ kann der Luftvolumenstrom gemessen werden, insbesondere an der Position des Sensors 14 in Strömungsrichtung vor dem Zentraldosierer 2. Je mehr Luftauslassöffnungen 10 verschlossen sind, desto geringer ist der Volumenstrom.

Es versteht sich, dass die Erfindung nicht auf die in der Fig. 1 gezeigte Ausführungsform beschränkt ist. Insbesondere sind auch abweichende Säeinrichtungen möglich.

## Patentansprüche

1. Dosiervorrichtung für granulares Material, insbesondere Saatgut, umfassend:
einen Vorratsbehälter (1) für das granulare Material;
einen mit dem Vorratsbehälter (1) verbundenen Zentraldosierer (2);
einen mit dem Zentraldosierer (2) verbundenen ersten pneumatischen Förderkanal (3) zum pneumatischen Fördern von granularem Material zu einem Verteilkopf (5);
wenigstens eine Säeinrichtung (8); und
einen zweiten pneumatischen Förderkanal (7) zum pneumatischen Fördern von granularem Material vom Verteilkopf (5) zur wenigstens einen Säeinrichtung (8); wobei die Säeinrichtung (8) wenigstens eine Luftauslassöffnung (10) aufweist, die durch einen Puffer von granularem Material oder durch ein Blockierelement wenigstens teilweise blockierbar ist; und
eine Sensoreinheit (14; 15; 16; 17) zur Bestimmung des im ersten pneumatischen Förderkanal (3), im zweiten pneumatischen Förderkanal (7) und/oder im Verteilkopf (5) herrschenden Drucks vorgesehen ist;
wobei der Zentraldosierer (2) basierend auf einem oder mehreren Messwerten der Sensoreinheit (14; 15; 16; 17) regelbar oder steuerbar ist, wobei der Zentraldosierer (2) so geregelt oder gesteuert wird, dass ein gewünschter Druck erhalten wird.

2. Dosiervorrichtung nach einem der vorangegangenen Ansprüche, wobei der erste pneumatische Förderkanal (3) mit einem Gebläse (4) verbunden ist und die Sensoreinheit (14) so angeordnet und/oder ausgebildet ist, dass der Druck im Bereich zwischen dem Gebläse (4) und dem Zentraldosierer (2) bestimmbar ist.

3. Dosiervorrichtung nach Anspruch 1, wobei die Sensoreinheit (15) so angeordnet und/oder ausgebildet ist, dass der Druck im ersten pneumatischen Förderkanal (3) im Bereich zwischen dem Zentraldosierer (2) und dem Verteilkopf (5) bestimmbar ist.

4. Dosiervorrichtung nach einem der vorangegangenen Ansprüche, wobei die Säeinrichtung (8) mehrere Luftauslassöffnungen (10) in Form eines Luftauslassgitters aufweist.

5. Dosiervorrichtung nach einem der vorangegangenen Ansprüche, wobei die Säeinrichtung (8) eine Vereinzelungseinrichtung ist.

6. Sämaschine umfassend eine Dosiervorrichtung nach einem der Ansprüche 1 - 5.

7. Verfahren zum Betreiben einer Sämaschine, die einen Vorratsbehälter (1) für granulares Material, einen mit dem Vorratsbehälter (1) verbundenen Zentraldosierer (2), einen mit dem Zentraldosierer (2) verbundenen ersten pneumatischen Förderkanal (3) zum pneumatischen Fördern von granularem Material zu einem Verteilkopf (5), wenigstens eine Säeinrichtung (8) und einen zweiten pneumatischen Förderkanal (7) zum pneumatischen Fördern von granularem Material vom Verteilkopf (5) zur wenigstens einen Säeinrichtung (8) umfasst, wobei die Säeinrichtung (8) wenigstens eine Luftauslassöffnung (10) aufweist, die durch einen Puffer von granularem Material oder durch ein Blockierelement wenigstens teilweise blockierbar ist, das Verfahren umfassend die Schritte:
Bestimmen, mittels einer Sensoreinheit (14; 15; 16; 17), des im ersten pneumatischen Förderkanal (3), im zweiten pneumatischen Förderkanal (7) und/oder im Verteilkopf (5) herrschenden Drucks; und
Regeln oder Steuern des Zentraldosierers (2) basierend auf einem oder mehreren Messwerten der Sensoreinheit (14; 15; 16; 17), der Zentraldosierer (2) so geregelt oder gesteuert wird, dass ein gewünschter Druck erhalten wird.

## Claims

1. Metering device for granular material, in particular seed, comprising:
a storage container (1) for the granular material;
a central metering means (2) connected to the storage container (1);
a first pneumatic conveying channel (3) connected to the central metering means (2) for pneumatically conveying granular material to a distribution head (5);
at least one sowing mechanism (8); and
a second pneumatic conveying channel (7) for pneumatically conveying granular material from the distribution head (5) to at least one sowing mechanism (8); wherein
the sowing mechanism (8) has at least one air outlet opening (10), which can be at least partly blocked by a buffer of granular material or by a blocking element; and
a sensor unit (14; 15; 16; 17) is provided for determining the pressure prevailing in the first pneumatic conveying channel (3), in the second pneumatic conveying channel (7) and/or in the distribution head (5);
wherein the central metering means (2) is controllable in a closed-loop or open-loop manner based on one or more measured values of the sensor unit (14; 15; 16; 17), wherein the central metering means (2) is controlled in a closed-loop or open-loop manner so that a desired pressure is obtained.

2. Metering device according to any of the preceding claims, wherein the first pneumatic conveying channel (3) is connected to a blower (4) and the sensor unit (14) is arranged and/or designed so that the pressure in the region between the blower (4) and the central metering means (2) can be determined.

3. Metering device according to claim 1, wherein the sensor unit (15) is arranged and/or designed so that the pressure in the first pneumatic conveying channel (3) in the region between the central metering means (2) and the distribution head (5) can be determined.

4. Metering device according to any of the preceding claims, wherein the sowing mechanism (8) has a plurality of air outlet openings (10) in the form of an air outlet grille.

5. Metering device according to any of the preceding claims, wherein the sowing mechanism (8) is a singling mechanism.

6. Seed drill comprising a metering device according to any of claims 1 - 5.

7. Method for operating a seed drill which comprises a storage container (1) for granular material, a central metering means (2) connected to the storage container (1), a first pneumatic conveying channel (3) connected to the central metering means (2) for pneumatically conveying granular material to a distribution head (5), at least one sowing mechanism (8) and a second pneumatic conveying channel (7) for pneumatically conveying granular material from the distribution head (5) to the at least one sowing mechanism (8), wherein the sowing mechanism (8) has at least one air outlet opening (10), which can be at least partly blocked by a buffer of granular material or by a blocking element, the method comprising the steps of:
determining, by means of a sensor unit (14; 15; 16; 17), the pressure prevailing in the first pneumatic conveying channel (3), in the second pneumatic conveying channel (7) and/or in the distribution head (5); and
closed-loop or open-loop control of the central metering means (2) based on one or more measured values of the sensor unit (14; 15; 16; 17), the central metering means (2) is controlled in a closed-loop or open-loop manner so that a desired pressure is obtained.

## Revendications

1. Dispositif de dosage pour une matière granulaire, en particulier des semences, comprenant :
un réservoir de stockage (1) pour la matière granulaire ;
un doseur central (2) relié au réservoir de stockage (1) ;
un premier canal de transport pneumatique (3) relié au doseur central (2) pour le transport pneumatique de matière granulaire vers une tête de distribution (5) ;
au moins un dispositif de semis (8) ; et
un second canal de transport pneumatique (7) pour le transport pneumatique de matière granulaire à partir de la tête de distribution (5) vers au moins un dispositif de semis (8) ; dans lequel
le dispositif de semis (8) présente au moins une ouverture de sortie d'air (10) qui peut être au moins partiellement bloquée par un tampon de matière granulaire ou par un élément de blocage ; et
une unité de capteur (14 ; 15 ; 16 ; 17) est prévue pour la détermination de la pression régnant dans le premier canal de transport pneumatique (3), dans le second canal de transport pneumatique (7) et/ou dans la tête de distribution (5) ;
dans lequel le doseur central (2) peut être régulé ou commandé sur la base d'une ou de plusieurs valeurs de mesure de l'unité de capteur (14 ; 15 ; 16 ; 17), dans lequel le doseur central (2) est régulé ou commandé de telle sorte qu'une pression souhaitée est obtenue.

2. Dispositif de dosage selon l'une des revendications précédentes, dans lequel le premier canal de transport pneumatique (3) est relié à une soufflante (4) et l'unité de capteur (14) est agencée et/ou réalisée de telle sorte que la pression peut être déterminée dans la zone entre la soufflante (4) et le doseur central (2).

3. Dispositif de dosage selon la revendication 1, dans lequel l'unité de capteur (15) est agencée et/ou réalisée de telle sorte que la pression dans le premier canal de transport pneumatique (3) peut être déterminée dans la zone entre le doseur central (2) et la tête de distribution (5).

4. Dispositif de dosage selon l'une des revendications précédentes, dans lequel le dispositif de semis (8) présente plusieurs ouvertures de sortie d'air (10) sous la forme d'une grille de sortie d'air.

5. Dispositif de dosage selon l'une des revendications précédentes, dans lequel le dispositif de semis (8) est un dispositif de séparation.

6. Semoir comprenant un dispositif de dosage selon l'une des revendications 1 à 5.

7. Procédé de fonctionnement d'un semoir, qui comprend un réservoir de stockage (1) pour une matière granulaire, un doseur central (2) relié au réservoir de stockage (1), un premier canal de transport pneumatique (3) relié au doseur central (2) pour le transport pneumatique de matière granulaire vers une tête de distribution (5), au moins un dispositif de semis (8) et un second canal de transport pneumatique (7) pour le transport pneumatique de matière granulaire à partir de la tête de distribution (5) vers au moins un dispositif de semis (8), dans lequel le dispositif de semis (8) présente au moins une ouverture de sortie d'air (10) qui peut être bloquée au moins partiellement par un tampon de matière granulaire ou par un élément de blocage, le procédé comprenant les étapes de :
détermination, au moyen d'une unité de capteur (14 ; 15 ; 16 ; 17), de la pression régnant dans le premier canal de transport pneumatique (3), dans le second canal de transport pneumatique (7) et/ou dans la tête de distribution (5) ; et
régulation ou commande du doseur central (2) sur la base d'une ou de plusieurs valeurs de mesure de l'unité de capteur (14 ; 15 ; 16 ; 17), le doseur central (2) est régulé ou commandé de telle sorte qu'une pression souhaitée est obtenue.
